Europäisches Patentamt

European Patent Office

Office européen des brevets

(19)

(11) Veröffentlichungsnummer: **0 1 1 0 1 1 5**
**A1**

# (12) EUROPÄISCHE PATENTANMELDUNG

(21) Anmeldenummer: **83110591.1**

(22) Anmeldetag: **24.10.83**

(51) Int. Cl.³: **C 01 G 37/027**, H 01 F 1/11,
G 11 B 5/70

(30) Priorität: **30.10.82 DE 3240337**

(43) Veröffentlichungstag der Anmeldung: **13.06.84**
**Patentblatt 84/24**

(84) Benannte Vertragsstaaten: **DE FR GB NL**

(71) Anmelder: **BASF Aktiengesellschaft,
Carl-Bosch-Strasse 38, D-6700 Ludwigshafen (DE)**

(72) Erfinder: **Steck, Werner, Dr., Auerstrasse 4,
D-6700 Ludwigshafen (DE)**
Erfinder: **Kovacs, Jenoe, Dr., Kantstrasse 9,
D-6717 Hessheim (DE)**
Erfinder: **Mueller, Norbert, Dr., Maximilianstrasse 23,
D-6701 Friedelsheim (DE)**
Erfinder: **Jakusch, Helmut, Dr., Lorscher Ring 6c,
D-6710 Frankenthal (DE)**

(54) **Nadelförmige ferromagnetische Chromdioxidteilchen.**

(57) Die Erfindung betrifft nadelförmige ferromagnetische Chromdioxidteilchen, die einen pH-Wert von größer 4 aufweisen, ein Verfahren zu ihrer Herstellung sowie ihre Verwendung bei der Herstellung von magnetischen Aufzeichnungsträger.

EP 0 110 115 A1

## Nadelförmige ferromagnetische Chromdioxidteilchen

Die Erfindung betrifft nadelförmige ferromagnetische Chromdioxidteilchen, die einen pH-Wert von größer 4 aufweisen, ein Verfahren zu ihrer Herstellung sowie ihre Verwendung bei der Herstellung von magnetischen Aufzeichnungsträgern.

Die Herstellung von nadelförmigem ferromagnetischem Chromdioxid und die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften.

Es wurde auch schon vorgeschlagen, für magnetische Speichermedien ferromagnetisches Chromdioxid im Gemisch mit anderen magnetischen Materialien einzusetzen. So sind für Magnetschichten auf Kreditkarten und anderen Identitätsausweisen bereits Mischungen von Chromdioxid mit weiteren magnetischen Materialien sehr hoher Koerzitivfeldstärke beschrieben worden (u.a. US-PSen 3 986 205, 3 986 206, 4 281 043). Auch für übliche Magnetaufzeichnungsträger, insbesondere für Videobänder, sind Chromdioxidabmischungen bekannt. Dies gilt vor allem für Mischungen von Chromdioxid mit bekannten magnetischen Eisenoxiden, wie in der DE-PS 19 55 699 offenbart.

Es ist jedoch auch bekannt, daß sich die magnetischen Eigenschaften von nichtstabilisiertem Chromdioxid enthaltenden Aufzeichnungsträgern im Laufe der Zeit verschlechtern. Ferromagnetisches Chromdioxid in Pulverform ist bei Ausschluß von Feuchtigkeit weitgehend stabil, auch ist eine Änderung der magnetischen Eigenschaften über lange Zeit nicht feststellbar. Es wurde aber beobachtet, daß Chromdioxid sowohl von Wasser als auch von anderen Materialien, wie beispielsweise

Sob/P

dem bei der Herstellung von magnetischen Aufzeichnungsträgern verwendeten organischen Polymerbindemitteln unter Zersetzung zu nichtmagnetischen Bestandteilen angegriffen wird. Bei magnetischen Aufzeichnungsträgern bedeutet dies neben einem Verlust bei den magnetischen und somit elektroakustischen Eigenschaften auch eine Beeinträchtigung der mechanischen Werte. Diese Verschlechterung wird bei höheren Temperaturen noch beschleunigt. Als Ursache hierfür wird die oxidative Wirkung von Chrom-(VI)-Ionen angesehen, welche entweder aufgrund des Herstellungsprozesses dem Chromdioxid noch anhaften oder bei der Disproportionierung des Chromdioxids entstehen.

Es hat daher nicht an Versuchen gefehlt, diese Nachteile zu beseitigen. So beschreibt die US-PS 3 512 930 die Behandlung von Chromdioxid-Pulver mit einem Reduktionsmittel. Auf diese Weise wird an der Oberfläche eine Schutzschicht aus stabilen Chrom-(III)-Verbindungen erzeugt. Nach anderen Verfahren werden Aluminiumoxid-Überzüge (US-PS 3 687 726) oder solche aus schwerlöslichen Metallphosphaten (US-PS 3 686 031) erzeugt. Auch das Aufbringen von Metallverbindungen, deren Kationen zur Bildung schwerlöslicher Chromate befähigt sind, ist bereits bekannt geworden. Die JA-OS 21200/76 schlägt zur Umhüllung der Chromdioxid-Teilchen das oberflächliche Aufbringen magnetischer Eisenoxide vor, während gemäß der DE-OS 27 49 757 Eisen-(III)-haltige oxidische Niederschläge auf das Chromdioxid aufgebracht werden.

Wenn auch die Stabilität des Chromdioxids mit den vorgenannten Maßnahmen mehr oder weniger zufriedenstellend erreicht werden kann, so stellt der durch die bekannten Herstellverfahren für das Chromdioxid bedingte stark saure Charakter des Materials insbesondere dann einen gravierenden Nachteil dar, wenn dieses Chromdioxid in Abmischung

0110115

mit üblichen alkalischen zumindest neutralen magnetischen Materialien oder sonstigen Füllstoffen in ein Bindemittel für die Ausbildung einer Magnetschicht eingearbeitet werden soll.

Die Erfindung betrifft nadelförmige ferromagnetische Chromdioxidteilchen, deren Oberfläche in wäßriger Phase mit anorganischen Reduktionsmitteln behandelt wurden, die dadurch gekennzeichnet sind, daß das Filtrat der wäßrigen Suspension dieser Teilchen nach dem Erhitzen auf 100°C bei Raumtemperatur einen pH-Wert von größer 4 aufweist.

Die verbesserten Teilchen werden nach einem Verfahren hergestellt, bei dem nadelförmige ferromagnetische Chromdioxidteilchen in Wasser suspendiert und bei einer Temperatur zwischen 10 und 70°C mit einer wäßrigen Lösung von Alkalisulfiten oder -bisulfiten sowie einer wäßrigen Lösung eines Eisen(II)salzes versetzt werden, anschließend wird der Feststoff vom Wasser abgetrennt, mit Wasser gewaschen und bei einer Temperatur von kleiner 130°C getrocknet.

Dabei hat es sich als vorteilhaft herausgestellt, wenn die Suspension der Chromdioxidteilchen mit wäßrigen Basen auf einen pH-Wert zwischen 4 und 11 eingestellt wird.

In einer besonders zweckmäßigen Ausgestaltung des erfindungsgemäßen Verfahrens wird die Trocknung in Inertgasatmosphäre, üblicherweise Stickstoff, bei einer Temperatur von kleiner 100°C durchgeführt.

Für die Zwecke der Erfindung kann jedes in bekannter Weise hergestellte, bevorzugt jedoch fremdionenmodifizierte ferromagnetische Chromdioxid eingesetzt werden. Die in Frage kommenden Chromdioxide weisen eine Koerzitivfeldstärke von

0110115

"größer 15 kA/m und eine spezifische remanente Magnetisierung" von mehr als 25 n/Tm$^3$/g auf. Ihre Herstellung wird in den US-PSen 2 885 365, 2 923 683, 2 923 684, 3 034 988, 3 278 263, 3 451 771, 3 529 930 und 4 045 544 sowie in den DE-OSen 2 022 820, 2 942 646, 2 001 383, 1 802 469, 2 520 030 und 2 648 305 beschrieben.

Die entsprechend dem Stand der Technik hergestellten Chromdioxide weisen alle einen pH-Wert von kleiner 4 auf. Zur Bestimmung werden 5 g Chromdioxid in 50 ml destillierten Wasser aufgeschlämmt und die Suspension innerhalb von 10 Minuten auf 100°C erhitzt. Nach dem Abkühlen auf Raumtemperatur wird das Chromdioxid abfiltriert und der pH-Wert des Filtrats mit einer pH-Einstabmeßkette, z.B. vom Typ Schott H 65, bei 22°C gemessen.

Das erfindungsgemäße nadelförmige ferromagnetische Chromdioxid weist nun einen pH-Wert von größer 4 auf. Zu seiner Herstellung wird das Chromdioxid in Wasser suspendiert, wobei die Gewichtsverhältnisse von Wasser zu Chromdioxid zweckmäßigerweise 5:1 bis 30:1, insbesondere von 8:1 bis 20:1 betragen. Zu dieser Suspension werden unter Rühren die wäßrigen Lösungen des Reduktionsmittels und des Eisen(II)salzes eingebracht. Als Reduktionsmittel werden die Alkalisulfite oder -bisulfite, insbesondere Natriumsulfit, Natriumbisulfit oder auch Mischungen von Natriumhydroxid und Schwefeldioxid in dem der chemischen Zusammensetzung des Natriumsulfits entsprechenden Verhältnis. Geeignete Eisen(II)salze sind das Chlorid und das Sulfat. Die Zugabe der Reduktionsmittel- und der Eisen(II)salzlösungen kann in beliebiger Reihenfolge oder auch gleichzeitig erfolgen. Die Umsetzung des Chromdioxids mit dem Reduktionsmittel und dem Eisen(II) wird bei Temperaturen zwischen 10 und 70, vorzugsweise zwischen 15 und 50°C durchgeführt.

In einer bevorzugten Ausgestaltung des erfindungsgemäßen Verfahrens wird während der Zugabe von Reduktionsmittel und/oder Fe(II)Salz mit einer weiteren wäßrigen Lösung einer Base, insbesondere von Alkalihydroxiden, der pH-Wert während und/oder nach der Umsetzung der Komponenten auf gewünschte Werte eingestellt. So soll der pH-Wert der wäßrigen Suspensionen von Chromdioxid und Reduktionsmittel und/oder Fe(II)salz in der Regel einen Wert von 4,5 nicht unterschreiten. Falls der pH-Wert der Suspension, z.B. bei der Verwendung größerer Mengen an Fe(II)salz unter 4,5 liegt, so wird mit wäßriger Lauge ein Unterschreiten des pH-Wertes verhindert und nach beendetem Eintrag des Fe(II)salzes der pH-Wert der Suspension mittels Basen wieder angehoben, bevorzugt auf Werte von größer als 7.

Nach der Umsetzung des Chromdioxids wird der resultierende Feststoff vom Wasser abgetrennt, mit Wasser gewaschen und danach getrocknet. Bei der Trocknung, die an der Luft, in Gegenwart von Sauerstoff und/oder Inertgasen, wie Stickstoff vorgenommen werden kann, dürfen Produkttemperaturen von 130°C, bevorzugt von 100°C nicht überschritten werden.

Das resultierende erfindungsgemäße Chromdioxid wird nicht nur durch seinen pH-Wert charakterisiert, es muß daneben auch die magnetischen Eigenschaften aufweisen, die seine Verwendung als magnetisches Material bei der Herstellung von magnetischen Aufzeichnungsträger erlauben. Die magnetischen Eigenschaften wurden bei einer Meßfeldstärke von 160 kA/m mit einem konventionellen Schwingmagnetometer bestimmt. Die Koerzitivkraft ($H_c$) wird für ein Stopfgewicht $\rho$ von 1,3 g/m$^3$ in kA/m, die spezifische Remenenz (Mr/$\rho$) und die spezifische Magnetisierung Mm/$\rho$ werden in nTm$^3$/g angegeben.

Wird das erfindungsgemäße Chromdioxid in Abmischung mit mindestens einem weiteren Magnetpigment mit einem pH-Wert von größer 4, gemessen nach der vorstehend beschriebenen Methode verwendet, so eignen sich dafür alle Magnet-Pigmente die durch ihr Herstellverfahren bedingt einen solchen pH-Wert aufweisen. Beispiele für solche Magnetpigmente sind die ferrimagnetischen Oxide $\gamma$-$Fe_2O_3$ oder $Fe_3O_4$ bzw. magnetische $FeO_x$-Pigmente mit x von 1,33 bis 1,5. Diese können beispielsweise über ein nach dem sogenannten alkalischen Verfahren hergestelltes $\alpha$-FeOOH (Goethit) als Zwischenprodukt hergestellt werden (DE-ASen 1 204 644, 2 550 225, 2 550 307, 2 550 308 und DE-OS 2 254 810). Zur Abmischung gut geeignet sind auch fremdionendotierte $FeO_x$-Pigmente mit x von 1,33 bis 1,5, die volumen- und/oder oberflächenmodifiziert sein können. Besonders bevorzugt sind cobaltmodifizierte Pigmente, die sowohl volumen- als auch oberflächendotiert sind. Die Herstellverfahren hierfür sind bekannt.

Auch feinteilige ferromagnetische Pigmente der Metalle Fe, Co und Ni bzw. ihrer Legierungen sind zur Abmischung geeignet.

Eine weitere geeignete Klasse solcher Magnetpigmente sind hexagonale Ferrite wie $BaFe_{12}O_{19}$; $Ba(Me, Ti)_x Fe_{12-2x}O_{19}$ mit Me = Zn, Co; $Ba_4Me_2Fe_{36}O_{60}$ mit Me = Fe, Zn; $BaMe_2Fe_{16}O_{27}$ mit Me = Fe, Zn, Co, Ni; $Ba_2Me_2Fe_{28}O_{46}$ mit Me = Fe, Zn; $Ba_2Me_2Fe_{12}O_{22}$ mit Me = Zn, Cu, Cd und $Ba_3Me_2Fe_{24}O_{41}$ mit Me = Fe, Zn. Anstelle von Bariumionen können in diesen Verbindungen auch Strontiumionen verwendet werden. Diese Magnetpigmente können nach den seit langem bekannten hydrothermalen oder keramischen Verfahren hergestellt werden. Auch die neueren, sogenannten Fluxverfahren liefern geeignete hexagonale Ferrite.

0110115

Weiterhin zur Abmischung gut geeignet sind die bekannten ferrimagnetischen Spinelle Me(II)O · $Fe_2O_3$ mit Me(II) als Mn, Ni, Cu, Co, Mg, Fe sowie Zn in Verbindung mit mindestens einem der vorgenannten Ionen. Die Herstellverfahren sind bekannt.

Diese Stoffe können sofern sie herstellbedingt einen pH von größer als 4 aufweisen in besonders vorteilhafter Weise in Abmischung mit dem erfindungsgemäßen Chromdioxid zur Herstellung von magnetischen Aufzeichnungsträgern verwendet werden.

Als nichtmagnetische Füllstoffe, welche oft zur Verbesserung von meist mechanischen Daten der Aufzeichnungsträger der Magnetschicht zugemischt werden, eignen sich zur Abmischung mit dem erfindungsgemäßen Chromdioxid die handelsüblichen Oxide wie $Cr_2O_3$, $\alpha$-$Fe_2O_3$, $Al_2O_3$, oder beispielsweise eine Mischung aus Quarz und Kaolinit. Die pH-Messungen ergeben dafür Werte zwischen 6 und 8.

Die erfindungsgemäßen Chromdioxidpulver werden in an sich üblicher Weise zusammen mit den vorgesehenen magnetischen oder unmagnetischen feinteiligen Abmischkomponenten mit einem Bindemittel, sowie den geeigneten Dispergierhilfsmitteln, Gleitmitteln und weiteren üblichen Zusatzstoffen zu einer Dispersion verarbeitet.

Als Polymerbindemittel können hierfür die für solche Zwecke bekannten Polymerbindemittel verwendet werden, wie Vinylchlorid-Copolymere, Acrylat-Copolymere, Polyvinylacetale, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane

0110115

erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- oder 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'-Diisocyanatodiphenylmethan. Bevorzugte Polyesterurethane haben eine Shore-Härte A von 70 bis 100, eine Festigkeit von 400 bis 420 kp/cm$^2$ und eine Dehnung von etwa 200 bis 560 %. Gut bewährt haben sich auch Polymerbindemittel auf der Basis eines Copolymerisates aus 70 bis 95 und insbesondere 75 bis 90 Gew% Vinylchlorid und 5 bis 30 und insbesondere 10 bis 25 Gew% eines Alkylesters einer olefinisch ungesättigten Carbonsäure mit 3 bis 5 C-Atomen, wie Acrylsäure, Methacrylsäure oder Maleinsäure, und bevorzugt mit 1 bis 3 C-Atomen im Alkylrest. Hervorzuheben sind hierbei die entsprechenden Vinylchlorid-Copolymerisate mit mindestens einem $C_1$- bis $C_3$-Dialkylmaleinat, wie Copolymerisate aus 70 bis 90 Gew% Vinylchlorid, 5 bis 15 Gew% Dimethylmaleinat und 5 bis 15 Gew% Diethylmaleinat. Der K-Wert nach H. Fikentscher (Cellulose-Chemie 30 (1931), Seite 58 ff) der besonders geeigneten Copolymerisate liegt zwischen 40 und 90.

Zur Herstellung der Dispersion wird das im Rahmen der Erfindung behandelte Material zusammen mit den anderen mit der Lösung des Bindemittels und unter Zusatz der Dispergierhilfsmittel, Gleitmittel und weiteren üblichen Zusätzen in eine Dispergiereinrichtung, z.B. einer Topfkugelmühle oder einer Rührwerkskugelmühle, eingebracht. Die so erhaltene

0110115

Dispersion wird filtriert und mit einer üblichen Beschichtungsmaschine, z.B. mittels eines Linealgießers, auf den
nicht-magnetischen Träger in ein oder mehreren dünnen
Schichten oder auf einen mit einer anderen Magnetschicht
bereits versehenen Magnetogrammträger in dünner Schicht aufgetragen. In der Regel wird dann eine magnetische Ausrichtung
der anisotropen magnetischen Teilchen in der aufgetragenen
Schicht vorgenommen, bevor die flüssige Beschichtungsmischung auf dem Träger getrocknet wird, was zweckmäßigerweise während etwa 2 bis 5 Minuten bei Temperaturen von etwa
50 bis 90°C geschieht, wenn es sich um Aufträge auf thermoplastische Träger, z.B. Folien, handelt. Durch Hindurchführen der resultierenden Magnetschichten zwischen geheizten und polierten Walzen bei bevorzugt etwa 60 bis 80°C
lassen sich dann die Magnetschichten noch glätten und verdichten. Die Dicken der Magnetschichten betragen im allgemeinen 3 bis 20 und insbesondere 4 bis 15 um.

Magnetische Aufzeichnungsträger, welche unter Verwendung des
erfindungsgemäßen Chromdioxids hergestellt werden, zeichnen
sich durch eine besondere Homogenität und Einheitlichkeit der
Schicht aus. Insbesondere gilt dies wenn Abmischungen des
Chromdioxids mit anderen magnetischen Materialien oder
sonstigen Füllstoffen zur Anwendung gelangen.

Die Erfindung sei anhand folgender Beispiele und Vergleichsversuche näher erläutert. Die in den nachstehenden Beispielen
und Vergleichsversuchen genannten Teile und Prozente beziehen sich, soweit nicht anders angegeben, auf das Gewicht,
Volumenteile verhalten sich zu Teilen wie Liter zu Kilogramm.

Vergleichsversuch 1

Entsprechend den Angaben in Beispiel 5A der DE-AS 12 70 538 wurde unter Verwendung von $Sb_2O_3$ und nadelförmigem $Fe_2O_3$ ein Chromdioxid hergestellt.

(a) Das Reaktionsprodukt hatte einen pH-Wert von 2,4

(b) wurde dieses Material in ähnlicher Weise wie in Beispiel 4 der DE-AS 19 05 584 an Luft bei 220°C getempert, dann betrug der pH-Wert 2,3

(c) wurde die Behandlung nach (b) bei 340°C in einem Luftstrom von 50 Nl/h durchgeführt, dann betrug der pH-Wert 2,1

(d) nach dem Waschen und anschließendem Trocknen des nach (c) erhaltenen Material betrug der pH-Wert 2,5

(e) wurde das $CrO_2$ (b) nach Beispiel 31 der DE-AS 19 25 541, jedoch mit 8 Gew% Natriumsulfit stabilisiert, dann betrug der pH-Wert 2,1

(f) das $CrO_2$ nach (a) wurde gemäß EP-A 029 687 in einen Stickstoffstrom von 50 Nl/h 5 Stunden lang bei 340°C getempert, der pH-Wert betrug dann 2,3

(g) gemäß den Beispielen 8 bis 10 der DE-AS 26 48 305 wurde ein $CrO_2$ hergestellt, das mit 1,7% Fe und 0,09% Te dotiert war, der PH-Wert betrug 2,2

(h) das $CrO_2$ gemäß (g) wurde wie bei (e) stabilisiert; der pH-Wert betrug 2,2

## Vergleichsversuch 2

Entsprechend den Angaben in Beispiel 5A der DE-AS 12 70 538 wurde unter Verwendung von $Sb_2O_3$ und nadelförmigem $Fe_2O_3$ ein Chromdioxid hergestellt und in ähnlicher Weise wie in Beispiel 4 der DE-AS 19 05 584 an Luft bei 270°C getempert. Der pH-Wert des Materials betrug danach 2,2.

250 g dieses $CrO_2$ wurden in einen Becherglas in 2,5 l Wasser dispergiert. Innerhalb 5 Minuten wurden unter weiterem Rühren eine Lösung von 20 g $Na_2SO_3$ in 100 ml Wasser eingetropft. Der pH-Wert der Suspension betrug 8,6. Danach wurde 15 Minuten nachgerührt. Der pH-Wert lag dann bei 7,0. Nach dem Filtrieren, Waschen mit Wasser und Trocknen wies das $CrO_2$ (Probe 2.1.) den in der Tabelle gezeigten pH-Wert auf.

Probe 2.2.: Nach beendeter Sulfitzugabe wurde mit NaOH ein pH von 10 eingestellt und dieser pH während dem 15minütigen Nachrühren auf diesem Wert gehalten.

Probe 2.3.: Wie bei Probe 2.2., jedoch wurde ein pH von 11 eingestellt;
Probe 2.4.: Wie bei Probe 2.2., jedoch wurde ein pH von 12 eingestellt.

Tabelle 1

$CrO_2$

pH im $CrO_2$-Pulver

| Probe | im Wasserstrahl-Vakuum (24 h) 50°C | Trocknung bei 130°C im Luftstrom von 30 Nl/h; Dauer; 75 min |
|---|---|---|
| 2.1. | 2,3 | 2,0 |
| 2.2. | 2,8 | 2,5 |
| 2.3. | 3,6 | 2,2 |
| 2.4. | 3,4 | 2,2 |

Beispiel 1A

Entsprechend den Angaben in Beispiel 5A der DE-AS 12 70 538 wurde unter Verwendung von $Sb_2O_3$ und nadelförmigem $Fe_2O_3$ ein Chromdioxid hergestellt, das in ähnlicher Weise wie in Beispiel 4 der DE-PS 1 905 584 bei 270°C in Gegenwart von Luft getempert wurde. Der pH-Wert der Probe betrug danach 2,4.

Nun wurde diese Probe in Mengen von je 250 g $CrO_2$ wie folgt behandelt:

Probe A (Vergleich): Wie Probe 2.3. im Vergleichsbeispiel 2; 8 Gew% $Na_2SO_3$

Probe B: 250 g $CrO_2$ wurden in einem Becherglas in 2,5 l Wasser dispergiert. Innerhalb von 5 Minuten wurde unter weiterem Rühren eine Lösung von 100 ml Wasser und 15 g $NaSO_3$ (6 Gew%), und danach gleichfalls innerhalb 5 Minuten 22,75 g $FeSO_4 \cdot 7 H_2O$ (= 1.83 Gew% Fe(II)) in 100 ml Wasser gelöst, eingetropft. Dann wurde mit NaOH ein pH von 11 eingestellt und dieser Wert während des Nachrührens von 15 Minuten Dauer konstant gehalten. Danach wurde filtriert, der Filterkuchen mit Wasser gewaschen und dann bei 45°C im Wasserstrahlvakuum getrocknet.

Probe C: Durchführung wie unter B angegeben jedoch mit folgenden Mengen:
11,6 g $Na_2SO_3$ (4,63 Gew%) und 37,5 g $FeSO_4 \cdot 7 H_2O$ = 3 Gew% Fe(II).

Probe D: Durchführung wie unter B angegeben jedoch mit folgenden Mengen:

7,35 g $Na_2SO_3$ (2,94 Gew%) und 63,25 g $FeSO_4 \cdot 7 H_2O$ (= 5,08 Gew% Fe(II).

Probe E (Vergleich): Behandlung wie unter B angegeben, jedoch nur mit 90 g $FeSO_4 \cdot 7 H_2O$ (= 7,2 Gew% Fe(II) gelöst in 150 ml Wasser ohne Zugabe von Natriumsulfit.

Die Ergebnisse sind in der Tabelle 2 angegeben.

Beispiel 2

Als Ausgangsmaterial wurde ein $CrO_2$ wie in Beispiel 1A angegeben eingesetzt.

Probe F: 250 g dieses $CrO_2$ wurden in einem Becherglas, versehen mit einer Glaselektrode, in 2,5 l Wasser dispergiert. Innerhalb von 5 Minuten wurden unter weiterem Rühren gleichzeitig zwei Lösungen bestehend aus 22,6 g $Na_2SO_3$ (4,63 Gew%) in 100 ml Wasser und 37,5 g $FeSO_4 \cdot 7 H_2O$ [= 3 Gew% Fe(II)] in 100 ml Wasser zugetropft. Um den pH-Wert der Suspension dabei in Bereich um 4,5 bis 5,5 zu halten, wurde zusätzlich eine dritte wäßrige Lösung, nämlich 12%ige Natronlauge zur pH-Regelung zugetropft. Nach beendetem Eintrag wurde 5 Minuten nachdispergiert, wobei der pH mit NaOH oberhalb von 4 gehalten wurde. Nun wurde mit 25%iger NaOH ein pH von 11 eingestellt und nochmals 5 Minuten nachdispergiert. Filtrieren, Waschen und Trocknen erfolgten wie im Beispiel 1 bei Probe B beschrieben.

Probe G: 130 g $CrO_2$ wurden in einem Becherglas, versehen mit einer Glaselektrode, in 1 300 ml Wasser dispergiert. Innerhalb von 5 Minuten wurden unter weiterem Rühren 6,02 g $Na_2SO_3$ (4,63 Gew%) in 75 ml Wasser und 19,5 g $FeSO_4 \cdot H_2O$ (3 Gew% Fe(II)) in 75 ml Wasser gleichzeitig zugetropft. Mit einer dritten Lösung, einer wäßrigen 12 %igen Natron-

lauge wurde der pH-Wert gleichzeitig auf 7 gehalten. Nach beendetem Eintrag der drei Lösungen wurde 5 Minuten bei pH = 7 nachdispergiert. Nun wurde mit 25%iger NaOH pH von 11 eingestellt und nochmals 5 Minuten nachdispergiert. Aufarbeitung zur Probe G wie bei F angegeben.

Probe H: Wie bei Probe G beschrieben, jedoch wurde während der Zugabe der drei Lösungen pH = 9 eingehalten.

Probe I: Wie bei Probe G beschrieben, jedoch wurde bereits während der Zugabe der drei Lösungen der pH-Wert = 11 eingestellt.

Die Ergebnisse sind in Tabelle 2 angegeben.

Beispiel 1B

Jeweils 90 Teile der $CrO_2$-Proben A bis I wurden zusammen mit 2,5 Teilen Zinkoleat und 30 Teilen einer 20%igen Copolymerisatlösung aus 80 Teilen Vinylchlorid und 20 Teilen Maleinsäureester gelöst in einem Lösungsmittelgemisch aus Tetrahydrofuran-Dioxan = 1:1, sowie 57 Teile des oben erwähnten Lösungsmittelgemisches in eine Rührwerkmühle mit einem Rauminhalt von 0,6 l gefüllt. Dazu wurden noch 1,8 kg Stahlkugeln mit einem Durchmesser von 3 bis 4 mm eingewogen. Anschließend wurde eine Homogenisierung von 2 Stunden durchgeführt. Danach wurde die Dispersion mit 108 Teilen einer 13%igen Lösung eines Polyurethans auf Basis Adipinsäure, Butandiol und 4,4'-Diphenylmethyldiisocyanat in Tetrahydrofuran-Dioxan = 1:1, sowie 0,09 Teilen eines Siliconöls und 32 Teilen des Lösungsmittelgemisches THF-Dioxan = 1:1 ver-

0110115

"setzt. Die Dispersion wurde dann noch eine Stunde behandelt, filtriert und mit einem Messergießer auf eine 12 µm Polyesterfolie gegossen, getrocknet und bei $80^{\circ}C$ kalandriert. Die magnetischen Eigenschaften der jeweiligen Magnetschichten sind in Tabelle 2 angegeben.

BASF Aktiengesellschaft

O.Z. 0050/36214

0110115

- 17 -

Tabelle 2

| Probe | Gew% bezogen auf $CrO_2$ | | pH im $CrO_2$ | $S_{N_2}$ [m²/g] | Magnetpulverwerte | | | Magnetbandwerte | | | | Richtfaktor |
|---|---|---|---|---|---|---|---|---|---|---|---|---|
| | $Na_2SO_3$ | Fe(II) | | | Hc | Mm/$\varrho$ | Mr/$\varrho$ | Hc [A/m] | Mm [mT] | Mr | $\frac{Mr}{Mm}$ | |
| Ausgangs-material | - | - | 2,4 | 25,0 | 47,6 | 85 | 48 | - | - | - | - | - |
| A | 8 | - | 3,6 | 28,1 | 46,4 | 78 | 43 | 47,0 | 189 | 167 | 0,88 | 3,1 |
| B | 6 | 1,83 | 4,5 | 31,9 | 48,7 | 77 | 44 | 48,0 | 214 | 188 | 0,88 | 3,2 |
| C | 4,63 | 3,0 | 5,6 | 35,9 | 49,2 | 73 | 41 | 48,7 | 182 | 159 | 0,87 | 3,0 |
| D | 2,94 | 5,08 | 6,1 | 40,9 | 49,3 | 68 | 39 | 49,8 | 174 | 146 | 0,84 | 2,3 |
| E | - | 7,2 | 6,4 | 40,9 | 49,8 | 67 | 38 | 49,9 | 159 | 126 | 0,79 | 1,8 |
| F | 4,63 pH 4,5-5,5 | 3,0 | 5,5 | 31,0 | 49,1 | 73 | 42 | 48,5 | 186 | 163 | 0,88 | 3,0 |
| G | 4,63 pH = 7 | 3,0 | 5,1 | 31,7 | 50,0 | 73 | 41 | 48,3 | 169 | 145 | 0,86 | 2,6 |
| H | 4,63 pH = 9 | 3,0 | 5,2 | 32,8 | 49,7 | 75 | 42 | 48,4 | 200 | 173 | 0,87 | 2,8 |
| I | 4,63 pH = 11 | 3,0 | 5,2 | 32,3 | 49,7 | 43 | 43 | 48,4 | 179 | 156 | 0,87 | 2,7 |

0110115

Beispiel 3

Als Ausgangsmaterial wurde ein $CrO_2$ wie im Beispiel 1A angegeben eingesetzt, welches durch ein anderes Verhältnis der Dotierung höherkoerzitiv war.

In einem Behälter wurde 1 kg dieses $CrO_2$ in 10 l Wasser dispergiert. Der pH der Suspension lag bei 2,4. Nun wurden innerhalb 5 Minuten unter weiterem Rühren 80 g $Na_2SO_3$ (= 8 Gew%) in 500 ml Wasser gelöst eingetropft. Der pH der Suspension stieg hierdurch auf 8,1 an. Nun wurde innerhalb 5 Minuten unter Weiterrühren eine Lösung von 199,2 g $FeSO_4 \cdot 7H_2O$ (4 Gew% Fe(II)) und 500 ml Wasser hinzugefügt. Um einen zu stark sauren pH-Wert zu vermeiden, wurde durch gleichzeitige Zugabe von NaOH der pH-Wert zwischen 4,6 und 6,0 gehalten. Nach beendetem Eintrag der Fe(II)Lösung wurde noch 3 Minuten nachgerührt. Unter Weiterrühren wurde die Suspension mit NaOH auf einen pH von 10,5 gebracht. Jetzt wurde ein Teil der Suspension, entsprechend 30 g $CrO_2$-Feststoff, entnommen, filtriert, mit Wasser gewaschen und im Vakuumtrockenschrank im Wasserstrahlvakuum bei 40 bis 50°C getrocknet: (Probe K: Hc = 53,9; Mm/$\rho$ = 62; Mr/$\rho$ = 36). Die restliche Suspension wurde mit NaOH auf einem pH von 11 gebracht und eine weitere Probe wie bei K entnommen und aufgearbeitet (Probe L: Hc = 54,0 Mm/$\rho$ = 63; Mr/$\rho$ = 37)

Nach dem Einstellen von pH = 12 wurde die restliche Suspension, entsprechend 940 g $CrO_2$ wie bei Probe K beschrieben aufgearbeitet (Probe M: Hc = 54,5; Mm/$\rho$ = 62; Mr/$\rho$ = 37).

Jeweils 10 g der Probe M wurden nun in einem Gasstrom von 30 Nl/h Luft oder Stickstoff 75 Minuten lang bei den in Tabelle 3 angegebenen Temperaturen in einem Drehkolben getempert und danach der pH-Wert bestimmt.

0110115

Im Vergleich hierzu sind die pH-Werte der $CrO_2$-Proben K, L, M nach der Trocknung bei 40 bis 50°C im Wasserstrahlvakuum angegeben.

| Probe | Trocknungsbedingungen | pH-Wert im $CrO_2$ getrocknet in Luft | im $N_2$-Strom |
|---|---|---|---|
| K | 40 - 50°C im Wasser- | 7,3 | - |
| L | 40 - 50°C strahlvakuum | 7,2 | - |
| M | 40 - 50°C | 6,8 | - |
|  | 80°C | 6,1 | 5,0 |
|  | 100°C | 4,8 | 4,2 |
|  | 130°C | 4,3 | 3,2 |
|  | 150°C | 2,8 | 2,9 |
|  | 170°C | 3,0 | - |
|  | 190°C | 2,8 | 3,0 |
|  | 210°C | 2,7 | 2,7 |

Beispiel 4

Als Ausgangsmaterial wurde ein $CrO_2$ wie in Beispiel 1 angegeben eingesetzt.

Jeweils 200 g dieses Chromdioxids (Probe N1) wurden in einem Behälter in 2 l Wasser dispergiert. Innerhalb von 5 Minuten wurden unter weiterem Rühren 3,12 g $Na_2SO_3$ (= 1,56 Gew%) gelöst in 50 ml Wasser eingetropft. Danach wurden innerhalb von 5 Minuten unter Weiterrühren 41,75 g $FeCl_2 \cdot 4 H_2O$ (= 5,8 % Fe(II)) gelöst in 100 ml Wasser eingetragen. Mit Hilfe einer 12 % wäßrigen Natronlauge wurde während des Fe(II)Eintrags der pH-Wert bei 3,5 gehalten. Nach beendetem Fe(II)Eintrag wurde der pH-Wert der Suspension auf 10 angehoben und dieser Wert auch während des Nachrührens von 5 Minuten beibehalten.

0110115

Nun wurde filtriert, mit Wasser auf Chloridfreiheit im Filtrat gewaschen und der Filterkuchen bei 50°C im Wasserstrahlvakuum getrocknet (Probe N 2). Der pH-Wert der Probe lag danach bei 6,3. Tabelle 3 zeigt die Ergebnisse der Pulvercharakterisierung.

Tabelle 3

| Probe | Hc | Mm/$\rho$ | Mr/$\rho$ | pH |
|-------|------|-----|-----|-----|
| N 1 | 26,3 | 95 | 43 | 2,4 |
| N 2 | 25,5 | 79 | 38 | 6,3 |

Beispiel 5

Als Ausgangsmaterial wurde ein $CrO_2$ wie in Beispiel 1 angegeben eingesetzt. Die Meßwerte dieses als Probe 01 bezeichneten Chromdioxids sind in Tabelle 4 angegeben.

Ein Teil der Probe wurde mit 8 Gew% $Na_2SO_3$ auf der Basis von Beispiel 31 der DE-AS 1 925 541 stabilisiert. Die Meßwerte sind in Tabelle 4 angegeben.

1 500 g $CrO_2$ der Probe 01 wurden in 15 l Wasser mit 69,45 g $Na_2SO_3$ (gelöst im 500 ml Wasser = 4,63 Gew% $Na_2SO_3$) und 225 g $FeSO_4 \cdot 7 H_2O$ (= 3 Gew% Fe(II); gelöst in 500 ml Wasser) gemäß Beispiel 2; Probe F, behandelt. Die Meßwerte dieses als Probe 03 bezeichneten Materials sind in Tabelle 4 angegeben.

Weitere 1 500 g $CrO_2$ wurden wie vorstehend beschrieben jedoch mit 4,63 Gew% $Na_2SO_3$ und 6 Gew% Fe(II) umgesetzt und aufgearbeitet (Probe 04).

O.Z. 0050/36214

Tabelle 4

| Probe | $Na_2SO_3$ Gew% | Fe(II) aus $FeSO_4 \cdot 7 H_2O$ Gew% | $CrO_2$-Pulverwerte | | | |
|---|---|---|---|---|---|---|
| | | | pH | Hc | Mm/$\rho$ | Mr/$\rho$ |
| 01 | ohne | ohne | 2,4 | 47,6 | 85 | 48 |
| 02 | 8 | ohne | 2,5 | 45,2 | 76 | 42 |
| 03 | 4,63 | 3 | 5,4 | 49,6 | 72 | 41 |
| 04 | 4,63 | 6 | 6,4 | 50,6 | 63 | 36 |

0110115

**Beispiel 7**

Entsprechend den Angaben in Beispiel 5A der DE-AS 12 70 538 wurde unter Verwendung von $Sb_2O_3$ und nadelförmigem $Fe_2O_3$ ein Chromdioxid hergestellt, das in ähnlicher Weise wie in Beispiel 4 der DE-AS 1 905 584 zuerst 75 Minuten lang bei $220^{\circ}C$ und dann 2 Stunden lang bei $280^{\circ}C$ in Gegenwart von Luft getempert wurde (Probe R 1).

1,7 kg $CrO_2$ der Probe R 1 wurden in 17 l Wasser dispergiert. Nun wurden innerhalb 5 Minuten gleichzeitig 3 Lösungen unter Rühren zugetropft:

Lösung 1: 136 g $Na_2SO_3$ (8 Gew%) gelöst in 1 l Wasser
Lösung 2: 677,56 g $FeSO_4 \cdot 7 H_2O$ (8 Gew% Fe(II)) gelöst in 1,3 l Wasser
Lösung 3: 25%ige wäßrige NaOH

Mit Hilfe der Lösung 3 wurde der pH-Wert der Suspension auf Werte knapp über 4 gehalten. Nach beendeter Zugabe der Lösungen 1 und 2 wurde 5 Minuten nachdispergiert. Anschließend wurde mit Lösung 3 ein pH-Wert von 11 eingestellt und nochmals weitere 5 Minuten gerührt. Nun wurde filtriert, mit Wasser gewaschen und der gewaschene Filterkuchen bei 40 bis $50^{\circ}C$ im Wasserstrahlvakuum getrocknet (Probe R 2).

Die Meßergebnisse sind in Tabelle 5 angegeben.

0110115

Tabelle 5

| Probe | Na$_2$SO$_3$ | Fe(II) | Pulverwerte | | | | |
| --- | --- | --- | --- | --- | --- | --- | --- |
| | | | pH | Hc | Mm/$\beta$ | Mr/$\beta$ | |
| R 1 | – | – | 2,2 | 47,1 | 86 | 49 | |
| R 2 | 8 | 8 | 6,6 | 50,2 | 66 | 38 | |

0110115

## Beispiel 8

Entsprechend den Angaben in Beispiel 5A der DE-AS 12 70 538 wurde unter Verwendung von $Sb_2O_3$ und nadelförmigem $Fe_2O_3$ ein Chromdioxid hergestellt, das in ähnlicher Weise wie in Beispiel 4 der DE-AS 1 905 584 bei 270°C in Gegenwart von Luft 3 Stunden lang getempert wurde (Probe S 1).

950 g der $CrO_2$-Probe S 1 wurden in 9,5 l Wasser dispergiert. Innerhalb 6 Minuten wurden unter weiterem Rühren 76 g $Na_2SO_3$ (8 Gew%), gelöst in 500 ml Wasser, eingetragen. Anschließend wurden gelöst in 1 l Wasser 379 g $FeSO_4 \cdot 7 H_2O$ (8 Gew% Fe(II)) innerhalb 6 Minuten eingetropft. Nun wurde 5 Minuten nachgerührt und dann mit verdünnter wäßriger Natronlauge in der Suspension ein pH-Wert von 11 eingestellt. Dann wurde filtriert, der Filterkuchen mit Wasser gewaschen und 36 h im Wasserstrahlvakuum bei 45°C getrocknet (Probe S 2).

Tabelle 6

$CrO_2$-Pulverwerte

| Probe | $Na_2SO_3$ Gew% | Fe(II) Gew% | pH | Hc | Mm/$\rho$ | Mr/$\rho$ |
|---|---|---|---|---|---|---|
| S 1 | - | - | 2,8 | 52,1 | 81 | 48 |
| S 2 | 8 | 8 | 9,3 | 56,2 | 57 | 34 |

Beispiel 9

$CrO_2$ das gemäß den Beispielen 8 bis 10 der DE-AS 26 48 305 hergestellt und mit 1,7 % Fe sowie 0,09 % Te dotiert war, wies einen pH-Wert von 2,2 auf (Probe T 1).

Ein Teil der Probe T 1 (90 g) wurde mit 8 Gew% $Na_2SO_3$ auf der Basis von Beispiel 31 der DE-AS 1 925 541 stabilisiert (Probe T 2).

Weitere 90 g der $CrO_2$-Probe T 1 wurden gemäß Beispiel 7 mit 4,63 Gew% $Na_2SO_3$ und 3 Gew% Fe(II) mit $FeSO_4 \cdot 7 H_2O$ aufgearbeitet (Probe T 3).

Die Meßergebnisse sind in Tabelle 7 angegeben.

Tabelle 7

Pulverwerte

| Probe | $Na_2SO_3$ Gew% | Fe(II) Gew% | pH | Hc | Mm/$\beta$ | Mr/$\beta$ |
|---|---|---|---|---|---|---|
| T 1 | - | - | 2,2 | 53,4 | 77 | 39 |
| T 2 | 8 | - | 2,2 | 54,9 | 74 | 36 |
| T 3 | 4,63 | 3 | 5,1 | 57,9 | 69 | 38 |

0110115

### Beispiel 10

50 Teile eines nach herkömmlichen Methoden hergestellten $CrO_2$-Pigments mit einem pH-Wert von 2,5 und einem Hc-Wert von 48 kA/m wurden zusammen mit 1,25 Teilen Zinkoleat, 71,1 Teilen einer 12,5 %igen Polyurethan-Lösung in THF-Dioxan (1 : 1), 11,1 Teilen einer 20 %igen Phenoxyharz-Lösung, 1,0 Teile Butylstearat, 0,25 Teilen Stearinsäure und 58,85 Teilen des Lösungsmittelgemisches THF-Dioxan (1 : 1) in eine Glasflasche mit einem Raumvolumen von 0,25 l und mit 0,43 kg Stahlkugeln (Durchmesser von 4 bis 6 mm) eingewogen. Die Glasflasche wurde anschließend in einen Schüttler eingespannt und 3 Stunden geschüttelt. Danach wurde die Dispersion von den Kugeln durch Filtration getrennt. Die aus der Dispersion mit einem Handgießer gefertigten Handabstriche zeigten kaum Warzen und Agglomerate. Der Rz-Wert der Oberfläche lag bei 0,8.

### Beispiel 11

Es wurde wie in Beispiel 10 beschrieben verfahren, wobei das Zinkoleat durch das basische Dispergierhilfsmittel Natriumoleat ersetzt wurde. Die aus der Dispersion hergestellten Handabstriche zeigten grobe Warzen und viele Agglomerate. Der Rz-Wert lag über 1,5.

### Beispiel 12

Es wurde wie in Beispiel 10 beschrieben verfahren, jedoch wurde ein gemäß Beispiel 8, Probe S 2 erhaltenes Chromdioxid mit einem pH-Wert von 9,3 und einem Hc-Wert von 56,2 kA/m eingesetzt. Die identisch hergestellten Handabstriche zeigten viele grobe Warzen, der Rz-Wert lag über 2,0.

Beispiel 13

Es wurde wie in Beispiel 12 beschrieben verfahren, jedoch
wurde als Dispergierhilfsmittel das basische Natriumoleat
eingesetzt. Die Handabstriche der Dispersion waren nahezu
warzenfrei mit einem Rz-Wert von kleiner 0,8. Schräglichtaufnahmen zeigten eine sehr gute Homogenität der Beschichtungen.

Beispiel 14

450 Teile eines gemäß Beispiel 3, Probe M erhaltenen Chromdioxids (Probe M im Beispiel 3) mit einem Pulver-Hc-Wert
von 54,5 kA/m und einem pH-Wert von 6,8 sowie 450 Teile
gemäß DE-OS 26 46 348 hergestellter Eisenteilchen mit einem
Hc-Wert von 73,2 kA/m und einem pH-Wert von 8,9 wurden mit
22,5 Teilen Natriumoleat, 640 Teilen einer 12,5 %igen Polyurethan-Lösung, 100 Teilen einer 20 %igen Phenoxyharz-Lösung, 850 Teilen eines Lösungsmittelgemisches aus Tetrahydrofuran : Dioxan (1 : 1) in einer Kugelmühle mit einem
Raumvolumen von 6 l und mit 8 kg Stahlkugeln bei einem Durchmesser von 4 bis 6 mm vermischt. Anschließend wurde der
Rauminhalt 210 Stunden gekugelt. Danach wurde die Dispersion noch mit 640 Teilen der 12,5 %igen Polyurethan-Lösung,
100 Teilen der obengenannten Phenoxyharz-Lösung, 9 Teilen
Butylstearat, 4,5 Teilen Stearinsäure und 200 Teilen des
genannten Lösungsmittelgemisches versetzt und 24 Stunden
dispergiert.

Die so entstandene Dispersion wurde anschließend in üblicher Weise zu Magnetbändern mit einer Schichtstärke von
4 µu verarbeitet.
Der Hc-Wert lag bei 64,4 kA/m und die Remanenz bei 193 mT.

Beispiel 15

Wie in Beispiel 14 beschrieben, wurde eine Dispersion aus 630 Teilen eines cobaltdotierten Eisenoxids mit einem Hc-Wert von 54,5 kA/m und einem pH-Wert von 8,0 sowie aus einem $CrO_2$ gemäß Beispiel 5, Probe 04 mit einem pH-Wert von 6,4 hergestellt. Die Dispergierzeit betrug 65 Stunden in der Vorphase und 24 Stunden in der Nachphase. Die Wiederholung des Versuchs mit einem saueren $CrO_2$-Pigment (pH = 2,5) ergab Dispergierzeiten von 120 Stunden in der Vorphase und 24 Stunden in der Nachphase.

Beispiel 16

60 Teile eines gemäß DE-AS 12 04 644 hergestellten $\gamma$-$Fe_2O_3$ mit einem Hc von 28,5 kA/m und einem pH-Wert von 9,6 sowie 60 Teile eines $CrO_2$ gemäß Beispiel 4, Probe N 2, wurden gemeinsam mit 7,2 Teilen eines Dispergierhilfsmittels auf der Basis einer Mischung eines Monophosphorsäureesters mit dem Salz einer Sulfobernsteinsäure, 30 Teilen einer 20 %igen Lösung eines Copolymeren aus Vinylchlorid-Alkylmaleinats gelöst in Tetrahydrofuran-Dioxan (1 : 1), 30,7 Teilen einer 12,5 %igen Polyurethan-Lösung ebenfalls in THF-Dioxan (1 : 1), 69,2 Teilen des Lösungsmittelgemisches THF-Dioxan (1 : 1) in einer Rührwerkskugelmühle mit einem Raumvolumen von 0,6 l und mit 1,8 kg Stahlkugeln bei einem Durchmesser von 4 bis 6 mm  2 Stunden dispergiert. Anschließend wurde die Dispersion mit 76,9 Teilen der obengenannten Polyurethan-Lösung, 53,3 Teilen des Lösungsmittelgemisches THF-Dioxan (1 : 1), 1,2 Teilen Stearinsäure, 0,24 Teilen Butylstearat, 0,24 Teilen Hydrochinon und 0,12 Teilen eines Siliconöls versetzt und eine Stunde gekugelt.

Es entstand eine Dispersion mit guter Homogenität. Die daraus nach dem üblichen Verfahren gefertigten Magnetbänder wiesen einen Hc-Wert von 25,9 kA/m, eine Remanenz von 173 mT und einen Richtfaktor von 2,7 auf. Der Rz-Wert lag bei 0,37.

## Beispiel 17

630 Teile des $CrO_2$-Pigments R 2 von Beispiel 7 sowie 270 Teile eines hexagonalen Ferrits der Formel $BaCoTiFe_{10}O_{19}$ mit einem Hc-Wert von 23 kA/m, einer spezifischen Remanenz von 22 $nTm^3/g$ und einem pH-Wert von 9,4, wurden gemeinsam mit den im Beispiel 14 beschriebenen Zusätzen und nach der ebenfalls im Beispiel 14 beschriebenen Methode zu Magnetbändern verarbeitet. Der Hc-Wert der Magnetbeschichtungen lag bei 47,7 kA/m, die Remanenz bei 97 mT und der Richtfaktor bei 1,8 bei einer Schichtstärke von 3,8 um, Rz-Wert = 0,2

0110115

Patentansprüche

1. Nadelförmige ferromagnetische Chromdioxidteilchen, deren Oberfläche in wäßriger Phase mit anorganischen Reduktionsmitteln behandelt wurde, dadurch gekennzeichnet, daß das Filtrat der wäßrigen Suspension dieser Teilchen nach dem Erhitzen auf $100^\circ C$ bei Raumtemperatur einen pH-Wert von größer 4 aufweist.

2. Verfahren zur Herstellung der nadelförmigen ferromagnetischen Chromdioxidteilchen gemäß Anspruch 1, dadurch gekennzeichnet, daß nadelförmige ferromagnetische Chromdioxidteilchen in Wasser suspendiert und bei einer Temperatur zwischen 10 und $70^\circ C$ mit einer wäßrigen Lösung von Alkalisulfiten oder -bisulfiten sowie einer wäßrigen Lösung eines Eisen(II)salzes versetzt werden, anschließend wird der Feststoff von Wasser abgetrennt, mit Wasser gewaschen und bei einer Temperatur von kleiner $130^\circ C$ getrocknet.

3. Verfahren gemäß Anspruch 2, dadurch gekennzeichnet, daß die wäßrige Suspension der Chromdioxidteilchen mit Basen auf einen pH-Wert zwischen 4 und 11 eingestellt wird.

4. Verfahren gemäß Anspruch 2 oder 3, dadurch gekennzeichnet, daß die Trocknung in Inertgasatmosphäre bei einer Temperatur von kleiner $100^\circ C$ erfolgt.

5. Verwendung der nadelförmigen ferromagnetischen Chromdioxidteilchen gemäß Anspruch 1, für einen magnetischen Aufzeichnungsträger aus einem unmagnetischen Trägermaterial und einer Magnetschicht aus in einem organischen Polymeren feinverteilten zumindest teilweise aus diesen Chromdioxidteilchen bestehenden magnetischen Material.

# EUROPÄISCHER RECHERCHENBERICHT

Europäisches Patentamt

0110115

Nummer der Anmeldung

EP 83 11 0591

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| P,X | EP-A-0 078 042 (E.I. DU PONT DE NEMOURS) <br> * Beispiel 7 * <br><br> --- | 1-3,5 | C 01 G 37/027 <br> H 01 F 1/11 <br> G 11 B 5/70 |
| X | US-A-3 958 068 (S. UMEKI et al.) <br> * Ansprüche 1,3,4,6; Spalte 2, Zeile 62 - Spalte 3, Zeile 9 * <br><br> --- | 2 | |
| D,X | DE-A-2 749 757 (BASF) <br> * Anspruch 1; Beispiele 2,3 * <br><br> --- | 2-5 | |
| A | DE-B-1 925 541 (E.I. DU PONT DE NEMOURS) <br> * Beispiel 18 * & US-A-3512930 (Cat. D) <br><br> --- | | |
| D,A | DE-B-1 905 584 (E.I. DU PONT DE NEMOURS) <br><br> --- | | |
| D,A | DE-B-1 270 538 (E.I. DE PONT DE NEMOURS) <br><br> ----- | | |

RECHERCHIERTE SACHGEBIETE (Int. Cl. 3)

C 01 G 37/00 <br> G 11 B 5/00 <br> H 01 F 1/00

Der vorliegende Recherchenbericht wurde für alle Patentansprüche erstellt.

| Recherchenort <br> BERLIN | Abschlußdatum der Recherche <br> 24-01-1984 | Prüfer <br> KESTEN W |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82